# EUROPEAN PATENT APPLICATION

(11) **EP 3 989 131 A1**
(43) Date of publication of application: **27.04.2022**
(21) Application number: 20827785.5
(22) Date of filing: 18.06.2020
(51) Int. Cl.: G06N 20/00

(54) **METHOD AND SYSTEM FOR REALIZING MACHINE LEARNING MODELING PROCESS**

(30) Priority: 18.06.2019 CN 201910525815
(71) Applicant: The Fourth Paradigm (Beijing) Tech Co Ltd, Beijing 100085 (CN)
(72) Inventor: WANG, Mengshuo, Beijing 100085 (CN); TU, Weiwei, Beijing 100085 (CN)
(74) Representative: Bergadano, Mirko
(86) International application number: PCT/CN2020/096807
(87) International publication number: WO 2020/253775

(57) **Abstract**

Provided are a method and system for realizing a machine learning modeling process. The method comprises: acquiring configuration information set by a user for at least part of a machine learning modeling process, wherein the configuration information is used for representing an execution policy of the at least part of the machine learning modeling process, and the configuration information comprises a first part, an execution policy of which has been determined, and a second part, an execution policy of which is to be determined; determining the execution policy of the second part by using automated machine learning technology; and executing the at least part of the machine learning modeling process on the basis of the execution policy of the first part and the determined execution policy of the second part to obtain a result corresponding to the at least part of the machine learning modeling process. Therefore, by means of combining the advantages of a human and a machine, the efficiency of realizing a machine learning process can be greatly improved.

## Description

### CROSS-REFERENCE TO RELATED APPLICATION

This application claims priority to and benefits of Chinese Patent Application Serial No. 201910525815.4, titled with "method and system for implementing machine learning modeling process", and filed on June 18, 2019, the entire content of which is incorporated herein by reference.

### FIELD

The present disclosure relates to a field of machine learning, and more particularly to a method for implementing machine learning modeling process, a system for implementing machine learning modeling process, and a storage medium.

### BACKGROUND

In the traditional machine learning modeling process, machine learning experts are required to manually determine all decisions. The decision making process often relies on human machine learning experience and business understanding, and often requires exhaustion and trial-and-error operation. On the one hand, specialized machine learning talents are needed, on the other hand, a large amount of human resources are needed. However, in scenarios with large decision-making space, manual methods are often unable to effectively find optimal decisions. Overall, the traditional machine learning modeling process requires specialized talents, consumes a lot of manpower and is inefficient.

The purpose of automated machine learning (AutoML) technology is to use an automated data-driven approach to determine machine learning solutions. Although automated machine learning technology can solve the problem of large demand for machine learning talents and high consumption of human resources in traditional machine learning to a certain extent, the automated machine learning technology in the related art has limited search efficiency, and it is difficult to obtain desired results in scenarios with limited computing resources, large decision-making space, and a large amount of data.

### SUMMARY

Illustrative embodiments of the present disclosure seek to solve the inefficiency problem existing in the automated machine learning algorithm in the related art.

According to a first aspect of the present disclosure, a system comprising at least one computing device and at least one storage device for storing instructions is provided. When the instructions are executed by the at least one computing device, the at least one computing device is caused to perform following steps of a method for implementing a machine learning modeling process: obtaining configuration information set by a user for at least part of the machine learning modeling process, in which the configuration information is configured to represent an execution strategy of the at least part of the machine learning modeling process, and the configuration information includes a first part and a second part, an execution strategy of the first part has been determined, and an execution strategy of the second part is to be determined; determining the execution strategy of the second part by using automated machine learning; and executing the at least part of the machine learning modeling process based on the execution strategy of the first part and the determined execution strategy of the second part, to obtain a result corresponding to the at least part of the machine learning modeling process.

According to a second aspect of the present disclosure, a method for implementing machine learning modeling process executed by at least one computing device is provided. The method includes: obtaining configuration information set by a user for at least part of the machine learning modeling process, in which the configuration information is configured to represent an execution strategy of the at least part of the machine learning modeling process, and the configuration information includes a first part and a second part, an execution strategy of the first part has been determined, and an execution strategy of the second part is to be determined; determining the execution strategy of the second part by using automated machine learning; and executing the at least part of the machine learning modeling process based on the execution strategy of the first part and the determined execution strategy of the second part, to obtain a result corresponding to the at least part of the machine learning modeling process.

According to a third aspect of the present disclosure, a system for implementing machine learning modeling process is provided. The system includes: an interaction device, configured to obtain configuration information set by a user for at least part of the machine learning modeling process, in which the configuration information is configured to represent an execution strategy of the at least part of the machine learning modeling process, and the configuration information includes a first part and a second part, an execution strategy of the first part has been determined, and an execution strategy of the second part is to be determined; and a machine learning processing device, configured to determine the execution strategy of the second part by using automated machine learning, and execute the at least part of the machine learning modeling process based on the execution strategy of the first part and the determined execution strategy of the second part to obtain a result corresponding to the at least part of the machine learning modeling process..

According to a fourth aspect of the present disclosure, a computer-readable storage medium storing instructions is provided. When the instructions are executed by at least one computing device, the at least one computing device is caused to perform the method described in the second aspect of the present disclosure.

With the method and the system for implementing machine learning modeling process according to the exemplary embodiments of the present disclosure, by referring to the user's machine learning experience and business understanding, the first part whose execution strategy can be determined by the user is obtained from the configuration information set by the user, and for the second part whose execution strategy cannot be determined by the user, the automated machine learning is used to determine the execution strategy of the second part, thus, the advantages of humans and machines can be combined to improve the implementation efficiency of the machine learning process.

### BRIEF DESCRIPTION OF THE DRAWINGS

These and other aspects and advantages of the present disclosure will become apparent and more readily appreciated from the following descriptions made with reference to the drawings, in which:
FIG. 1 is a flow chart of a method for implementing a machine learning modeling process according to an exemplary embodiment of the present disclosure;
FIG. 2 is an architectural diagram of a machine learning development system according to an exemplary embodiment of the present disclosure;
FIG. 3 is a schematic diagram illustrating a generation process of an original ontology model according to an exemplary embodiment of the present disclosure;
FIG. 4 is a flow chart of a solution of a machine learning modeling process implemented by performing operations on the ontology model shown in FIG. 3;
FIG. 5 is a schematic diagram illustrating a computational graph constructed based on FIG. 4;
FIG. 6 is a schematic diagram illustrating another computational graph constructed based on FIG. 4;
FIG. 7 is a block diagram illustrating a system for implementing a machine learning modeling process according to an exemplary embodiment of the present disclosure.

### DETAILED DESCRIPTION

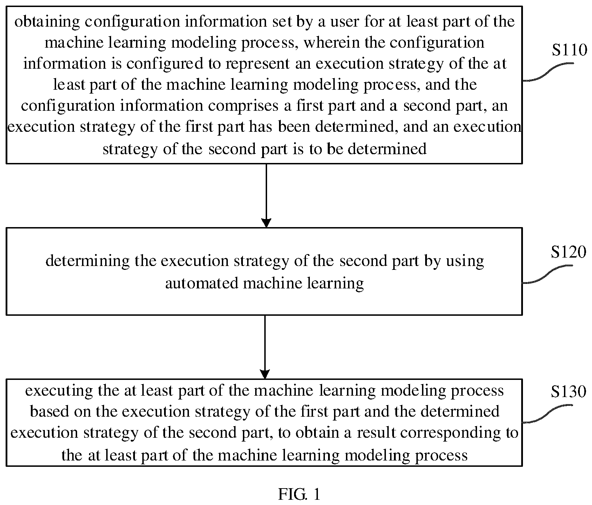

In order to enable those skilled in the art to better understand the present disclosure, the exemplary embodiments of the present disclosure will be further described in detail below with reference to the accompanying drawings and detailed implementations. It should be noted that "at least one of several items" appearing in the present disclosure means to include three parallel cases: "any one of the several items", "a combination of any multiple of the several items", and "the whole of the several items". The term "and/or" appearing in the present disclosure means at least one of the preceding and following two items connected by the term "and/or". For example, "including at least one of A and B", and "A and/or B" include the following three parallel situations: (1) only including A; (2) only including B; (3) including both A and B. For another example, "perform at least one of step one and step two", and "perform step one and/or step two" include the following three parallel situations: (1) only performing step one; (2) only performing step two; (3) performing both step one and step two. FIG. 1 illustrates a flow chart of a method for implementing a machine learning modeling process according to an exemplary embodiment of the present disclosure. The method illustrated in FIG. 1 may be completely implemented by a computer program in a software manner. The method illustrated in FIG. 1 may also be executed by a specially configured computing device.

It should be noted that, the machine learning model described in the embodiments of the present disclosure may be used to predict an image category, a text category, a voice emotion, a fraudulent transaction, an advertisement click-through rate, and the like. The machine learning model aims to predict problems related to objects or events in related scenes. For example, The machine learning model may be used to predict an image category, to predict text in an image, to predict a text category, to predict a voice emotion category, to predict a fraudulent transaction, to predict an advertising click-through rate, to predict a commodity price, etc., so that a prediction result may be directly used as a basis for decision-making or further combined with other rules to become the basis for decision-making.

Furthermore, the scenes in which the machine learning model in the embodiments of the present disclosure can be used include but are not limited to the following scenes.

An image processing scene, includes: optical character recognition (OCR), face recognition, object recognition, and image classification. In detail, for example, OCR may be applied to bill (such as invoice) recognition, handwriting recognition, etc. Face recognition may be applied to security and other fields. Object recognition may be applied to traffic sign recognition in an automatic driving scene. Image classification may be applied to "photo shopping" and "find the same style" on e-commerce platforms.

A voice recognition scene, includes a product that can interact with humans through voice, such as a mobile phone voice assistant (such as Siri on Apple phones), a smart speaker, etc.

A natural language processing scene, includes: reviewing a text (such as a contract, a legal document, customer service records, etc.), spam identification (such as spam SMS identification), and text classification (emotions, intentions, and topics, etc.).

An automated control scene, includes: mine group adjustment operation prediction, wind turbine system adjustment operation prediction, and air conditioning system adjustment operation prediction. In detail, a set of adjustment operations with a high mining rate may be predicted for a mine group, a set of adjustment operations with a high power generation efficiency for a wind turbine system, and a set of adjustment operations that meet demand while saving energy consumption can be predicted for an air conditioning system.

An intelligent question and answer (Q&A) scene, includes chat robots and intelligent customer service.

A business decision-making scene, includes scenes in the financial technology field, medical field, and municipal administration field.

The financial technology field includes marketing (such as coupon usage prediction, advertising click behavior prediction, user portrait mining, etc.) and customer acquisition, anti-fraud, anti-money laundering, underwriting and credit scoring, and commodity price prediction.

The medical field includes disease screening and prevention, personalized health management and auxiliary diagnosis.

The municipal administration field includes social governance, regulation and law enforcement, resource environment and facility management, industrial development and economic analysis, public services and people's livelihood protection, smart cities (the deployment and management of various urban resources such as public transportation, online car-hailing, shared bicycles, etc.).

A business recommendation scene, includes recommendation of news, advertising, music, consulting, video and financial products (such as wealth management, insurance, etc.).

A search scene includes web search, image search, text search, video search, etc.

An abnormal behavior detection scene, includes abnormal behavior detection of electricity consumption of customers of State Grid, network malicious traffic detection, abnormal behavior detection in operation logs, etc.

As illustrated in FIG. 1, at step S110, configuration information set by a user for at least part of the machine learning modeling process is obtained.

The at least part of the machine learning modeling process may be the complete machine learning modeling process, or a part of the machine learning modeling process. As an example, the at least part of the machine learning modeling process may include, but is not limited to, one or more of a data splicing process, a data splitting process, a feature generation process, a model building process, a model training process, a model testing process, a model evaluation process, a model application process, etc.

The configuration information is configured to represent an execution strategy of the at least part of the machine learning modeling process. The configuration information includes a first part whose execution strategy has been determined and a second part whose execution strategy is to be determined. The first part refers to a part whose execution strategy can be determined by the user based on his/her own machine learning experience and business understanding. The second part refers to a part whose execution strategy cannot be determined by the user by himself and may be determined by using a machine.

For example, the at least part of the machine learning modeling process includes the feature generation process and the model building process. The user knows which feature engineering function can be selected to obtain better features, but does not know which model structure to select, then the first part may refer to the feature generation process whose execution strategy has been determined, and the second part may refer to the model building process whose execution strategy is to be determined.

As an example, the first part may include one or more execution steps (for easy distinction, may be called the first execution steps), a first execution step includes a first input, a first processing function, and a first output; and/or the second part may include one or more execution steps (for easy distinction, may be called the second execution steps), a second execution step includes a second input, a second processing function and a second output. At least one of the second input, the second processing function and the second output is to be determined. Different execution steps (the first execution steps/ the second execution steps) have a predetermined execution order. As an example, the execution order of each execution step may be indicated in the configuration information. The first processing function and/or the second processing function may include, but are not limited to, one or more of: a data processing function, a feature engineering function, a modeling function, an automated machine learning function, a sharing and reuse function, a version management function, a model application function.

It should be noted that, the above content can also be expressed as that the present disclosure also includes at least one of the following two:
The first part may include one or more execution steps (for easy distinction, may be called the first execution steps). The first execution step includes a first input, a first processing function, and a first output.
The second part may include one or more execution steps (for easy distinction, may be called the second execution steps). The second execution step includes a second input, a second processing function and a second output. At least one of the second input, the second processing function and the second output is to be determined.

It should be noted that, the first processing function and/or the second processing function in the present disclosure may also be expressed as at least one of the first processing function and the second processing function.

For the second part, the user can specify a decision space based on the business understanding and previous modeling experience, and a machine searches for a relatively good execution strategy in the decision space specified by the user, or the user does not specify the decision space, and the machine searches for a relatively good execution strategy in a feasible decision space.

The configuration information mentioned in the present disclosure may refer to various forms of information, that is, the user may set the configuration information in various ways.

As an example of the present disclosure, the configuration information may be written by the user based on a language of a predetermined rule (for easy distinction, may be referred to as a second rule language). The second rule language may refer to a language that conforms to a predetermined rule form. For example, the second rule language may refer to a domain specific language (DSL for short). The domain-specific language may refer to the relevant description below, which is not repeated here.

As another example of the present disclosure, the configuration information may also be generated by the user through an operation performed by the user on an interactive interface displayed to the user for setting the at least part of the machine learning modeling process. In other words, the user may set the configuration information through a visual operation (such as drag and drop). For example, the user may set the configuration information by constructing a flowchart that is used to represent the execution strategy of the at least part of the machine information modeling process in the interactive interface. That is, the configuration information may be a flowchart constructed by the user in the interactive interface.

In addition, the configuration information may also be set by the user in other ways, which is repeated in the present disclosure.

At step 120, the execution strategy of the second part is determined by using automated machine learning.

The automated machine learning may be used to search for a relatively good execution strategy in a decision space corresponding to the second part to determine the execution strategy of the second part. In a case that the user specifies the decision space of the second part, the automated machine learning may be used to search for the relatively good execution strategy in the user-specified decision space as the execution strategy of the second part. In a case that the user does not specify the decision space of the second part, the automated machine learning may be used to search for the relatively good execution strategy in a feasible decision space as the execution strategy of the second part.

In the present disclosure, multiple algorithms such as an optimization algorithm and a search algorithm may be used to determine the relatively good execution strategy in the decision space of the second part. The decision space is used to represent a value set of the execution strategies of the second part, and the decision space may be specified by the user or determined by the machine. For example, multiple execution strategies with different values in the decision space of the second part may be evaluated, and then an execution strategy with a better evaluation result may be determined as the execution strategy of the second part.

As an example, the at least part of the machine learning modeling process may be executed according to the execution strategy of the first part and a value-assigned execution strategy of the second part, to obtain a result corresponding to the at least part of the machine learning modeling process. The result is evaluated. The execution strategy of the second part is re-assigned with a value according to an evaluation result. The above processes are repeated until a predetermined condition is met, and evaluation results of the multiple execution strategies with different values of the second part, and then the execution strategy with a better evaluation result can be determined as the execution strategy of the second part. The predetermined condition mentioned here may be a preset standard, such as the number of executions or the evaluation result reaching a predetermined threshold. In addition, the predetermined condition mentioned here can also be a termination operation made by the user, that is, the user can terminate the iterative process.

After the execution strategy of the second part is determined, the entire execution flow of the at least part of the machine learning modeling process is determined. Therefore, after the execution strategy of the second part is determined, step S130 may be executed. Based on the execution strategy of the first part and the determined execution strategy of the second part, the at least part of the machine learning modeling process is executed to obtain a result corresponding to the at least part of the machine learning modeling process.

In conclusion, in view of the low efficiency of automated machine learning technology in the related art, with the present disclosure, based on the user's machine learning experience and business understanding, the first part whose execution strategy can be determined by the user is obtained from the configuration information set by the user. For the second part whose execution strategy cannot be determined by the user, the automated machine learning technology is used to determine the execution strategy for the second part. Thus, the advantages of humans and machines can be combined in the present disclosure, thereby improving the implementation efficiency of the machine learning process.

In addition, most of the automated machine learning technologies in the related art complete one or more machine learning functionalities in the form of black boxes, and it is difficult for a user to interfere. In the present disclosure, the user can flexibly determine which execution strategies can be determined by humans and which execution strategies are to be determined by the machine based on the user's own machine learning experience and business understanding. Thus, the present disclosure can be implemented from fully automated (that is, all execution strategies are determined by the machine) to completely manual (that is, the user can determine all execution strategies).

According to the above description, the configuration information set by the user generally cannot be directly recognized by a back-end engine. Therefore, the present disclosure proposes that the configuration information may be translated into a language or instructions corresponding to the back-end engine, so that the back-end engine can execute the step S120 and/or the step S130 based on the translated language or instructions. It should be noted that executing the step S120 and/or the step S130 in the present disclosure may also be expressed as executing at least one of the step S 120 and the step S 130.

As an example, the back-end engine may include a computational graph engine and an execution engine. The execution engine may include, but is not limited to, one or more of an optimization engine, a machine learning engine, and an automated machine learning engine. Language types corresponding to different engines may be the same or be different.

A first computational graph may be generated by the computational graph engine based on the language or the instruction. The first computational graph is used to represent an implementation flow of determining the execution strategy of the second part. The computational graph engine may determine the execution strategy of the second part by calling the execution engine to execute the first computational graph.

The computational graph engine may also generate a second computational graph based on language or instructions. The second computational graph is used to represent an implementation flow of the at least part of the machine learning modeling process. The computational graph engine may obtain the result corresponding to the at least part of the machine learning modeling process by calling the execution engine to execute the second computational graph.

In the related art, most automated machine learning algorithms can only consider rigorously defined indicators (for example, indicators that can be displayed and calculated by clear methods), but many important indicators in actual business (such as whether data leakage occurs, interpretability of the results) are difficult to give a rigorous definition. Thus, automated machine learning algorithms cannot consider these indicators, and it is difficult to produce results that meet actual business needs. In addition, most of the existing technologies perform one or more machine learning functionalities in the form of black boxes, which makes it difficult for a user to interfere.

In order to solve this problem, the present disclosure proposes that, during executing the step S 120 and/or the step S 130, a current execution result may be output to the user in real time; and/or during executing the step S120 and/or the step S130, an adjustment made by the user for the configuration information may be obtained, and the at least part of the machine learning modeling process is executed based on the adjusted configuration information.

It should be noted that, the above content may also be expressed as that the present disclosure may further include at least one of the following steps.

During the execution of the step S120 and/or the step S130, the current execution result is output to the user in real time.

During the execution of the step S120 and/or the step S130, the adjustment made by the user for the configuration information is obtained, and the at least part of the machine learning modeling process is executed based on the adjusted configuration information.

Therefore, with the present disclosure, the user is allowed to view the execution result at any time, which is convenient for the user to determine whether the current solution can obtain a result that meets business needs based on the user's business understanding, without forcing the user to give a rigorous definition of a goal, thereby improving controllability of the machine learning modeling process.

The existing automated machine learning algorithm determines the solution based on specific data. When the solution determined by the automated machine learning algorithm is applied to a specific scene, due to a storage format of data in the specific scene and a storage format of data used to determine the solution may be inconsistent, the solution may be modified according to the actual storage format of the data, which is cumbersome to implement.

In order to solve this problem, the present disclosure proposes that data description information may be obtained. The data description information describes one or more types of data, attributes of the data, and relationships between the data and/or the attributes. A data model that is used to structurally represent the data, the attributes, and the relationships is obtained. It should be noted that the data and/or the attributes in the present disclosure may be expressed as at least one of the data and the attributes.

The data mentioned here represents a kind of data entity, such as transaction data, user data, item data, and so on. The attribute is used to describe characteristics of the data, and may refer to a field in the data. For example, a piece of user data may include multiple fields such as age, gender, and occupation. Therefore, the user data may include but is not limited to multiple attributes such as age, gender, and occupation. The description of the attribute in the data description information may include where the attribute is obtained, i.e., a storage mode of the actual data corresponding to the attribute, for example, which column in which file a certain attribute corresponds to. The relationships between the data and/or the attributes include the relationship between data, the relationship between the data and the attributes, and the relationship between attributes.

It should be noted that, in the present disclosure, there is no strict boundary between the data and the attribute. The attribute itself may be regarded as a kind of data. How to treat the attribute depends on whether it is emphasized as an attribute of data or as data in the actual application.

In the present disclosure, the data description information may be written by the user based on a language of a predetermined rule (for easy distinction, may be referred to as a first rule language). The specific form of the first rule language is not limited in the present disclosure. According to the above description, the data description information contains logical relationships between the data and/or the attributes and the storage mode of the actual data. Therefore, by analyzing the data description information, the data model configured to structurally represent the data, the attributes and the relationships can be obtained. The data model may also include an actual storage location of the data. As an example, the data description information may be read by using a reading function that is capable of recognizing the first rule language, and the data model can be obtained based on the data description information.

The configuration information may be set by the user based on the data model, and may be configured to represent an execution strategy of implementing the at least part of the machine learning modeling process based on the data and/or the attributes represented by the data model. For example, a data model may be presented to the user, so that the user can set the configuration information based on the data model.

Optionally, recommendation information may be output to the user. The recommendation information is configured to represent a feasible operation for the data model. Thus, the user may refer to the recommendation information displayed to the user when setting the configuration information. For example, a set containing all or part of feasible operations (the feasible operations mentioned here refer to legal and specific operations on the current data model, such as taking some data and variables/constants as input, and calling a specific feature engineering function to generate one attribute or a group of attributes) may be given as a recommended strategy according to the data model (such as data and their relationships). The user may view, modify, and adopt all or part of the recommended strategy.

By using the data model as an interface between the user and the actual data, the conversion from data in different storage forms to the data model is completed at the bottom layer, so that the user can focus on the meaning of the data and business logic without considering its actual storage form when setting the configuration information, thus reducing the modification of the solution due to the inconsistency of the data storage form when the solution is deployed.

That is to say, when the storage form of data changes, only the data model description information is to be modified, modification corresponding to these changes can be completed by importing new data model description information, without the need to modify the configuration information. Or, when the storage form of the used data changes, a changed part of the data model may be directly modified. In this case, there is no need to modify the configuration information.

In order to better reflect the effect of the data model, the implementation process of the step S120 and the step S130 when setting configuration information based on the data model is illustrated below.

As an example, the step S120 may include the following. At step A1, data required for executing the at least part of the machine learning modeling process is obtained based on the data model. At step A2, a value is assigned to the execution strategy of the second part. At step A3, the at least part of the machine learning modeling process is performed for the data based on the execution strategy of the first part and the value-assigned execution strategy of the second part, to obtain a result corresponding to the at least part of the machine learning modeling process. At step A4, the result is evaluated.

Thus, evaluation results of multiple value-assigned execution strategies of the second part may be obtained. Based on the evaluation steps A1 to A4, a better execution strategy may be determined from a decision space of the second part by using various algorithms such as an optimization algorithm and a search algorithm. For example, based on the above steps A1 to A4, the evaluation results of multiple execution strategies with different values of the second part may be further obtained, and then an execution strategy with a better evaluation result may be determined as the execution strategy of the second part. Optionally, obtaining the evaluation results of the plurality of execution strategies with different values of the second part based on the steps A1 to A4 and determining the execution strategy with the better evaluation result as the execution strategy of the second part may include the following. At step A5, a value is re-assigned to the execution strategy of the second part based on an evaluation result. The steps A3 to A5 are repeated until a predetermined condition is satisfied, and the execution strategy with the better evaluation result is determined as the execution strategy of the second part.

As an example, the step S130 may include the following. Data required for executing the at least part of the machine learning modeling process is obtained based on the data model. The at least part of the machine learning modeling process is performed for the data based on the execution strategy of the first part and the determined execution strategy of the second part, to obtain the result corresponding to the at least part of the machine learning modeling process.

It can be seen that, during the execution of the step S120 and the step S130, the actual data is obtained according to the data model. Therefore, when the storage location of the actual data changes, the data model may be updated without the need of modifying the execution strategies in the step S120 and the step S130. Therefore, after the solution of the machine learning modeling process is determined by using the present disclosure, when the solution is deployed online, even if the data storage form changes, there is no need to modify the solution itself.

As described above, the configuration information may be written based on a domain specific language. The following is an exemplary description of the implementation process of the present disclosure when the configuration information is written based on the domain specific language.

The domain specific language mentioned in the present disclosure refers to a language that focuses on the field of machine learning, and the language defines a variety of entities and a series of functions.

An entity is used to represent an object with a predetermined meaning in the field of machine learning, and/or an entity can perform a predetermined action. It should be noted that the above content may also be expressed as: the entity is configured to perform at least one of: representing an object with a predetermined meaning in the field of machine learning, and performing a predetermined action.

For example, the entity may include, but is not limited to, a data entity, an attribute entity, a constant entity, a variable entity, a model entity, a decision entity, and a target entity. The data entity is used to represent data in the context of machine learning, and is capable of performing an action of obtaining actual data. The attribute entity is used to represent an attribute of a data entity, and is capable of performing an action of obtaining actual data corresponding to the attribute. The constant entity is used to represent a constant, storing a value of the constant. The variable entity is used to represent a variable, and storing a value of the variable. The model entity is used to represent a model in the context of the machine learning, and is capable of performing actions of training a model and/or predicting by using the model. The decision entity is used to a decision expected to be determined by a machine, and is capable of performing actions of generating a decision and/or obtaining an optimal decision. The target entity is used to represent an evaluation result, and the target entity is capable of performing an action of optimizing and/or calculating the evaluation result.

It should be noted that performing the actions of training a model and/or predicting by using the model in the present disclosure may also be expressed as performing at least one action of training a model; and predicting by using the model.

Performing the actions of generating a decision and/or obtaining an optimal decision in the present disclosure may also be expressed as performing at least one action of generating a decision and obtaining an optimal decision.

Performing the actions of optimizing and/or calculating the evaluation result in the present disclosure may also be expressed as performing at least one action of optimizing and calculating the evaluation result.

The series of functions refers to functions that can realize predetermined functionalities. The user can realize a specific functionality by calling a specific function. As an example, the functionalities that can be implemented by the series of functions may include, but are not limited to, data processing, feature engineering, modeling, model application, solution development for interactive machine learning and automated machine learning, application of automated machine learning technology, and creation, modification, reuse and version maintenance of an ontology model.

As described above, the first part includes one or more first execution steps, the first execution step includes the first input, the first processing function, and the first output; and/or the second part includes one or more second execution steps, the second execution step includes the second input, the second processing function, and the second output. At least one of: the second input, the second processing function, and the second output is to be determined.

Therefore, when writing the configuration information based on the domain specific language, the first input may include one or more entities (for easy distinction, may be called the first entities). The first entity is used to: represent an object with a predetermined meaning in the machine learning field, and/or perform a predetermined action. The second input may include one or more entities (for easy distinction, may be referred to as the second entities). The second entity is used to: represent an object with a predetermined meaning in the machine learning field, and/or t perform a predetermined action.

It should be noted that, the above content may also be expressed the following. The first input includes one or more first entities, and the first entity is configured to perform at least one of: representing an object with a predetermined meaning in a machine learning field; and performing a predetermined action. The second input includes one or more second entities, and the second entity is configured to perform at least one of: representing an object with a predetermined meaning in the machine learning field; and performing a predetermined action.

The first entity and/or the second entity may include, but are not limited to, one or more of a data entity, an attribute entity, a constant entity, a variable entity, and a model entity. It should be noted that, the first entity and/or the second entity may be expressed as at least one of the first entity and the second entity.

The second execution step refers to a step whose execution strategy is to be determined, thus the second entity may also include a decision entity. In other words, the decision entity may be used to identify a part that requires the machine to determine the execution strategy. Optionally, the decision entity may include a value range of decisions, so that the machine can determine an optimal decision of the decision entity within the value range.

The configuration information may further includes an optimization step whose execution strategy is determined. An input of the optimization step includes the result of the at least part of the machine learning modeling process. A processing function of the optimization step is a target definition function. The target definition function is used to evaluate the result to obtain a target entity. The target entity may be selected by the user from multiple existing target entities or may be defined by the user.

Thus, the step 120 includes executing the optimization step. Executing the optimization step includes the following. At step B1, an actual data obtaining action is performed on an original data entity and/or an original attribute entity for executing the at least part of the machine learning modeling process, to obtain corresponding actual data. At step B2, a decision generation action is performed on the decision entity to obtain a value of the decision entity. At step B3, the at least part of the machine learning modeling process is performed for the data based on the execution strategy of the first part and a value-assigned execution strategy of the second part to obtain a result corresponding to the at least part of the machine learning modeling process. At step B4, a result evaluation action is performed on the target entity. It should be noted that, the original data entity and/or the original attribute entity in the present disclosure may also be expressed as at least one of the original data entity and the original attribute entity.

Thus, an evaluation result of the value-assigned decision entity may be obtained. Based on the steps B1 to B4, multiple algorithms such as an optimization algorithm and a search algorithm may be used to determine a better value in the value space of the decision entity. For example, based on the above steps B1 to B4, evaluation results corresponding to multiple values of the decision entity may be obtained, and a value with a better evaluation result may be determined as an optimal decision of the decision entity. The original data entity and the original attribute entity refer to entities that originally exist, rather than entities generated through functional processing.

As an example, obtaining the evaluation results of the multiple values of the decision entity based on the above steps B1 to B4 and determining the value with the better evaluation result as the optimal decision of the decision entity may include the following. At step B5, a next-round value of the decision entity is determined based on the evaluation result. The above steps B2 to B5 are repeated until a predetermined condition is met, and the value with the better evaluation result is determined as the optimal decision of the decision-making entity.

The step 130 includes the following. An actual data obtaining action is performed on an original data entity and/or an original attribute entity for executing the at least part of the machine learning modeling process, to obtain corresponding actual data. An optimal decision of the decision entity is obtained. The at least part of the machine learning modeling process is performed for the actual data based on the execution strategy of the first part and the determined execution strategy of the second part, to obtain the result corresponding to the at least part of the machine learning modeling process.

Optionally, throughout the execution, the first entity and/or the second entity may be presented to the user; and/or, a modification of the user on the first entity and/or the second entity is received, so that the machine learning modeling process is controllable.

It should be noted that, the above content may be expressed as: throughout the execution, at least one of the following steps is included. At least one of the first entity and the second entity is presented to the user. A modification of the user on at least one of the first entity and the second entity is received.

### Application examples

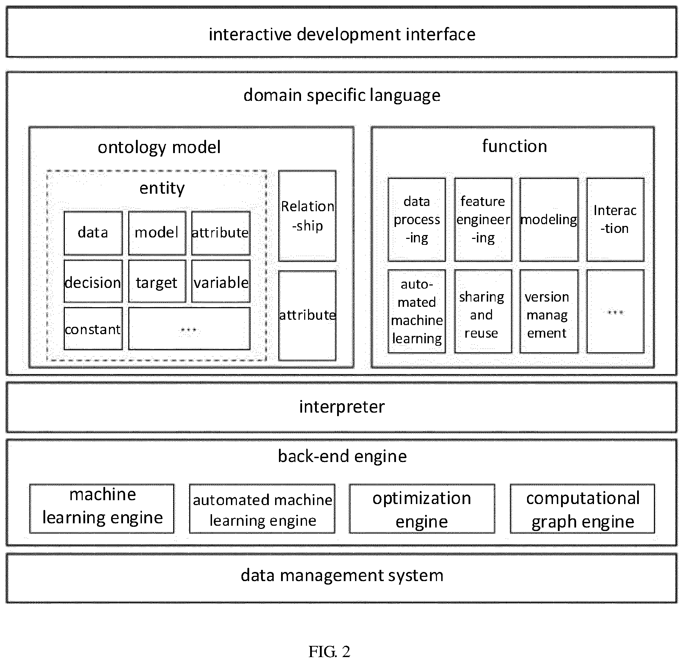

FIG. 2 is an architectural diagram of a machine learning development system according to an exemplary embodiment of the present disclosure. The implementation method of the machine learning modeling process of the present disclosure may be executed by the machine learning development system illustrated in FIG. 2.

As illustrated in FIG. 2, the machine learning development system consists of an interactive development interface, a domain specific language, an interpreter, a back-end engine, and a data management system from top to bottom. The higher the layer, the easier it is to be contacted by a user.

The interactive development interface is an interface for the user to interact with the machine to develop solutions of machine learning or automated machine learning together with the machine. The functionalities of the interactive development interface may include, but are not limited to: a visualization functionality of an ontology model, a decision recommendation functionality (suggesting feasible operations, possible better decisions to the user, etc.) during the development of solution of the machine learning, a functionality of running the code in the background and viewing running progress and results (or intermediate results) at any time.

The domain specific language is a language that focuses on machine learning field and is used by the user interacting with a machine to develop, modify, maintain, and reuse solutions.

As illustrated in FIG. 2, the domain specific language may include an ontology model and a series of functions. The ontology model shown in FIG. 2 refers to a machine learning solution for at least part of the machine learning modeling process implemented based on a domain-specific language. The ontology model shown in FIG. 2 may be composed of entities, relationships, and attributes. The ontology model may be used as an interactive medium between the user and the back-end engine, as well as a carrier for the user to carry out development iteration, version management, sharing and reuse. Regarding the entities, the attributes, the relationships, and the series of functions, reference may be made to the relevant description above, which is not repeated here.

The interpreter may be used to interpret the domain specific language into languages or instructions, such as executable codes, of different back-end engines.

The back-end engine includes some existing (including self-developed) machine learning engines, automated machine learning engines, optimization engines, and computational graph engines, and other engines may be introduced in the future.

The data management system may be used to realize the storage, access and transfer of data.

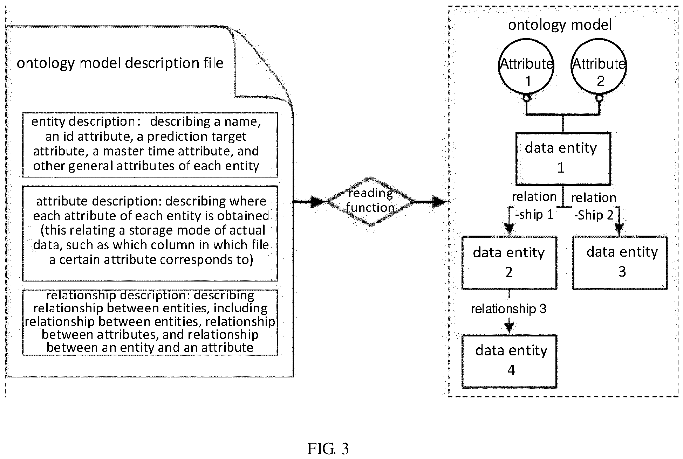

FIG. 3 is a schematic diagram illustrating a generation process of an original ontology model according to an exemplary embodiment of the present disclosure. The ontology model shown in FIG. 3 is also the data model mentioned above, and the ontology model description file shown in FIG. 3 is also the data model description file mentioned above.

As illustrated in FIG. 3, an original ontology model may be obtained by reading the ontology model description file conforming to a specific format by a reading function corresponding to the domain specific language mentioned in the present disclosure. This descriptive file describes the entities, attributes, and relationships in the ontology. The attribute description may be noted. The attribute description declares a storage location of actual data corresponding to each attribute of each entity (for example, a certain column of a certain file). This information may be recorded in each attribute of the ontology model. When the storage location or form of all or part of the data is changed, the user may complete the modification corresponding to these changes (the changes of the storage location or form of the data) by modifying the description file (or reloading a new description file), without the need to modify the ontology model. In another alternative method, information stored in the attributes in the ontology model may be directly modified. In this case, there is no need to modify other parts of the ontology model.

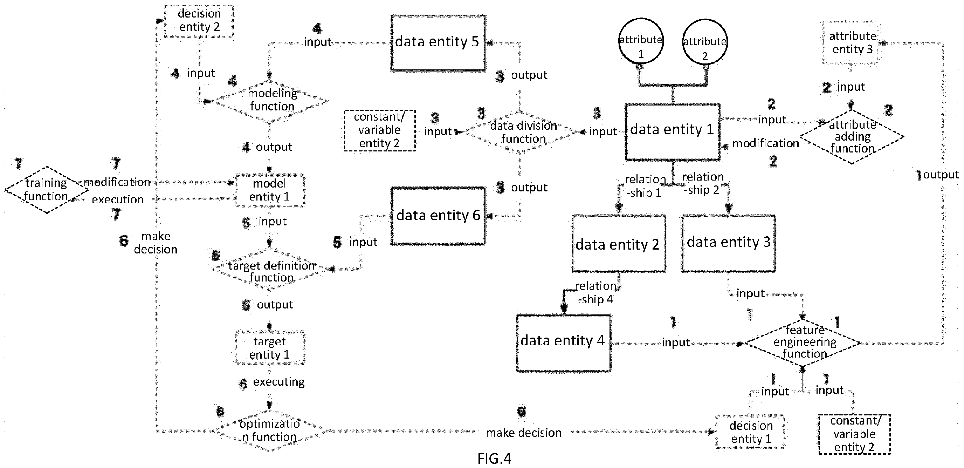

FIG. 4 is a flow chart of a solution of a machine learning modeling process implemented by performing operations on the ontology model shown in FIG. 3. The parts other than the ontology model in FIG. 4 (the ontology model shown in FIG. 3) can be regarded as the configuration information set by the user according to the ontology model. In other words, the original ontology model and the configuration information set by the user constitute a complete machine learning solution, such as the solution shown in FIG. 4. The solution shown in FIG. 4 can be regarded as a complete ontology model constructed based on the domain specific language. The ontology model refers to a complete machine learning solution, which is different from the ontology model (i.e., a data model) shown in FIG. 3, which is only used to represent data structure.

Rectangles in FIG. 4 represent entities, circles represent attributes, rhombuses represent functions, arrow lines represent relationships, and each circle-head line links an entity and a corresponding attribute. The shapes and lines formed by solid lines indicate an original ontology model (i.e., the ontology model shown in FIG. 3), and the shapes and lines formed by the dotted lines indicate entities, relationships, and attributes generated by subsequent operations. The numbers indicate the order of operations. For example, a feature engineering function and its three inputs and one output are labeled with 1, this means that the first operation performed on the ontology model is to execute the feature engineering function, and the function has three inputs and one output.

As illustrated in FIG 4, in this embodiment, the original ontology model involves two relationships: 1) ordinary relationships, such as relationship 1, relationship 2, relationship 3, etc.; 2) a relationship constituted by functions, such as the relationship represented by the number 1, i.e., "The attribute entity 3 is an output generated by a feature engineering function by using the data entity 3, the data entity 4, the constant/variable entity 1 and the decision entity 1 as inputs".

The four steps 1, 2, 3, and 4 in FIG 4 modify the original ontology model in turn. Decision entities involved in these operations may be temporarily ignored, and may simply be considered as certain entities. Similarly, steps 5 and 6 may also be temporarily ignored, which will be described in detail below. Effect of each step will be described step-by-step below.

At step 1: a data entity 3, a data entity 4, a constant/variable entity 1, and a decision entity 1 are taken as inputs, a feature engineering function is called to generate an attribute entity 3 as an output.

At step 2: an attribute entity 3 is taken as an input, an attribute adding function is called to modify the data entity 1.

At step 3: the data entity 1 after the step 2 and a variable/constant entity 2 are taken as inputs, a data division function is called to output a data entity 5 and a data entity 6.

At step 4: the data entity 5 and a decision entity 2 are taken as inputs, a modeling function is called to generate a model entity 1 as an output.

The decision entity 1 and the decision entity 2 in FIG. 4 represent decisions designated by the user and hoped to be determined by the machine. At the time of designation, the decision entities are in a pending state. In order to enable the machine to make a correct decision, the user may also inform the machine of a target, so that the machine can determine each decision with the purpose of optimizing the target. In order to describe the optimization target and perform the optimization, the user sets operations 5 and 6 (corresponding to the optimization steps mentioned above).

At step 5: the model entity 1 and the data entity 6 are taken as inputs, a target definition function is called, and a target entity 1 (representing, for example, an accuracy of the model) is output.

At step 6: the target entity 1 is caused to execute the calling of an optimization function, and decisions for the decision entity 1 and the decision entity 2 are made.

After the step 6 is performed, each decision entity related to the target entity 1 (detailed below) may get a determined value (corresponding to a decision made by the machine), and the state of the decision changes to "determined".

After the value of the decision entity is determined, step 7 may be executed to train the model.

The execution flow of the machine learning solution shown in FIG. 4 will be described below.

### (1) Determination of decision entities

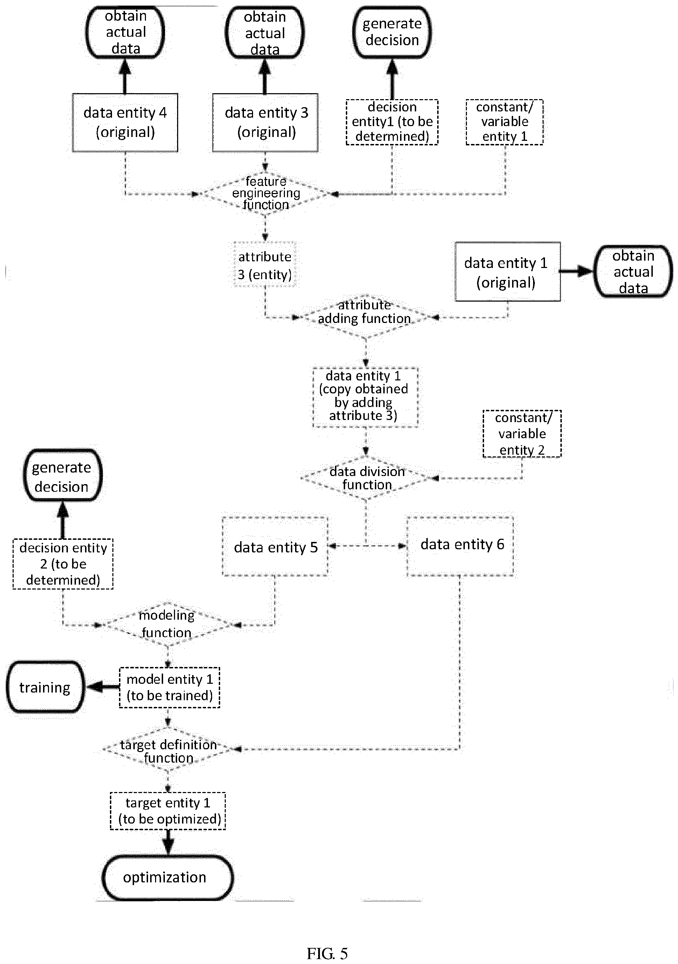

A computational graph (corresponding to the first computational graph mentioned above) shown in FIG. 5 may be constructed by a computational graph engine.

It should be noted that the decision entity 1 and the decision entity 2 in the computational graph shown in FIG. 5 are currently in a pending state. The target entity 1 in the computational graph is currently in a state "to be optimized". The model entity 1 in the computational graph is currently in a state "to be trained". The data entity 1, the data entity 3, and the data entity 4 in the computational graph are original data entities.

Once the step 6 in FIG. 4 is executed, the target entity 1 performs its "optimization" action, which will result in following.
1. The computational graph engine finds all original data entities (data entities 1, 3, 4), all original attribute entities (not shown in FIGs), and all decision entities (decision entities 1, 2) against the direction of the dotted arrows.
2. For all the original data entities (data entities 1, 3, 4) and the original attribute entities (not shown in FIGs) found in 1, their "obtain actual data" actions are executed
3. For all the decision entities found in 1 (decision entities 1, 2), their "generate decision" actions (a specific behavior of this action is determined by the algorithm of the optimization engine in the backend engine) are executed.
4. The computational graph is executed in an order indicated by the arrows, each function in the process is executed (the functionality is realized by its underlying machine learning engine or automated machine learning engine). The "obtain actual data "action of each generated data entity and each generated attribute entity (the "obtain actual data" of the generated data entity and the generated attribute entity is different from that of the original entity, the latter is obtaining the corresponding actual data based on the description file, while the former may perform calculation of the computational graph description, and the actual data of the original entity may be used during the calculation) in the process is performed. The "training" action is performed on the model entity (model entity 1) passed during the execution process. For each model, if a decision entity whose state is "to be determined" is found against a direction of the dashed arrow by taking the model as a starting point, the state of the model is kept as "to be trained", otherwise, its state is set as "trained".
5. The "calculate a current value" action is performed on a target entity itself that performs the "optimization", and the optimization engine may obtain this value to give the next set of candidate decisions.
6. 3-5 are repeated until the optimization engine or the user terminates the process. For each iteration, the "generate decision" action of the decision entity may generate different values according to the algorithm of the optimization engine.

After the above process is over, all decision entities (decision entities 1, 2) related to the target entity 1 make a decision. At this time, the state of the decision entities 1 and 2 becomes "determined".

### (2) Model training process

After the step 6 in FIG. 4 is performed, all decision entities related to the model entity 1 (i.e., related to the target entity 1, because the target entity 1 is defined based on the model entity 1) become the "determined" state. At this time, the step 7 shown in FIG. 4 may be performed for the user to make the model entity 1 execute the "training function", and the model entity 1 is modified according to the result.

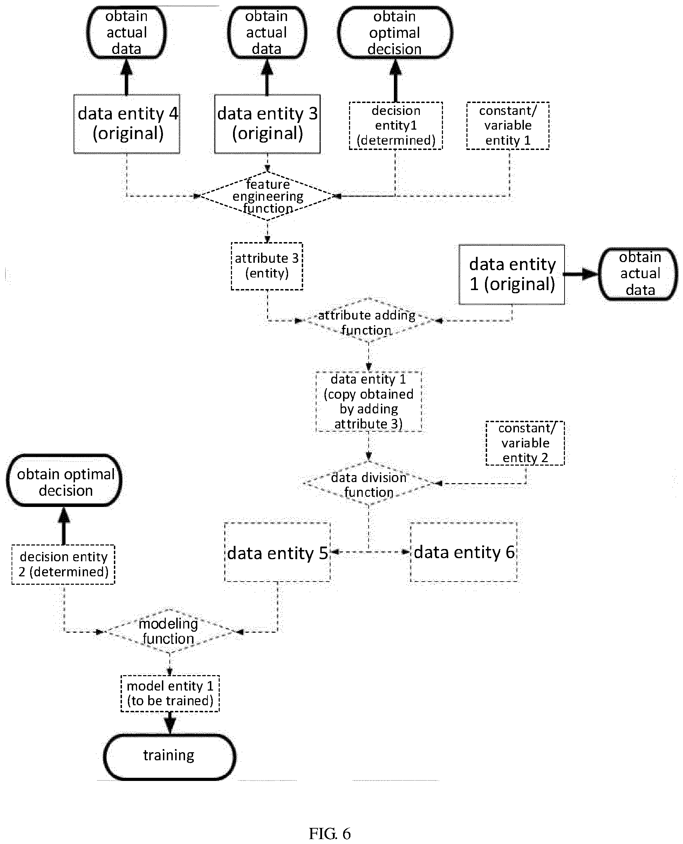

As an example, a computational graph (corresponding to the second computational graph mentioned above, it does not include all the bold parts, and the target entity 1 is ignored because it has nothing to do with model training) shown in FIG. 6 may be constructed. It should be noted that the decision entities 1 and 2 in F FIG. 6 are in the "determined" state, but the model entity 1 is still in the "to be trained" state.

Once the step 7 is executed, the model entity 1 performs its "training" action, which will result in following.
1. All original data entities (data entities 1, 3, 4), all original attribute entities (not shown in the FIG. 6), and all decision entities (decision entities 1, 2) are found against a direction of the dotted arrows by taking the model entity 1 as a starting point.
2. For all the original data entities (data entities 1, 3, 4) and original attribute entities (not shown in FIG. 6) found in 1, their "obtain actual data" actions are executed.
3. For all the decision entities (decision entities 1, 2) found in 1, their "obtain optimal decision" actions are executed.
4. The computational graph is executed in an order indicated by the arrows, and each function in the execution process is executed (the functionality is realized by its underlying machine learning engine or automated machine learning engine). The "obtain actual data "action of each generated data entity and each generated attribute entity in the process is performed. The model entity (model entity 1) passed during the execution process executes the "training" action, and its state is set to "trained".

After the above process ends, the model entity 1 is in the "trained" state. The development of the solution shown in FIG. 4 is completed.

It should be noted that, the data entity 5 and the data entity 6 obtained by the data division function in FIG. 5 are used as training data and verification data, respectively. The data entity 5 and data entity 6 obtained by the data division function in FIG. 6 are both used as training data participating in the model training, that is to say, the data entity 6 can be considered as empty data, and all the data are divided to the data entity 5 through the data division function. In the embodiments of the present disclosure, the training data varies according to different application scenarios of the machine learning model. For example, in an OCR scene of image processing, an acquired data record is image data. In scenes related to an anti-money laundering and anti-fraud in the financial technology field, the training data is the transaction flow data of bank users and data related to the user. Those skilled in the art can understand the difference in training data in different scenes.

That is, those skilled in the art can understand that, when a machine learning model is applied to a specific scene, the machine learning model is trained based on the training sample data set corresponding to the scene. For example, for product price prediction, the corresponding training data is historical data (for example, attributes, season, inventory, etc. of a product when the product was sold in history are used as the features of the sample, and the sold price is used as the label) of the product. Correspondingly, in the product price prediction scene, the training data is composed of the current relevant information of the product, and the training samples are constructed based on the training data. For example, current attributes, season, inventory, etc. of the product are taken as features of prediction samples, and the training data is input to the machine learning model, after that, a predicted price output by the model is obtained. Other scenes are similar, which is not repeated here.

The biggest feature of automated machine learning is to determine certain decisions based on actual tasks (often relying on actual data). In the present disclosure, in order to develop an automated machine learning solution, the user only need to set the decisions that the user considers important as decision entities, and ensure that the decision entities are in a "to be determined" state before an ontology model (for example, as shown in FIG. 4) corresponding to the solution is published, shared, and deployed. When faced with a new actual task, an "optimization" action corresponding to the target entity is executed, so that these decisions can be adjusted according to the actual data.

The user can interactively develop a solution of machine learning or automated machine learning in FIG. 4, as an example, through an interactive development interface involved in the present disclosure. The interactive development interface supports all domain specific languages involved in the present disclosure, and can provide the following functions.
1) Obtaining feedback function: A function that the user can view the specific definition and all attributes of each entity, view the actual data corresponding to the data entity and the attribute entity, view the state of the model entity/decision entity/target entity, and view the value of the variable/constant entity, and the like. Optionally, the interactive development interface can display, in a graphical form, the ontology model (the ontology model here may be the original ontology model or the complete ontology model corresponding to the entire solution) and attribute entities (attributes of data entities). The generation process of the attribute entities (including attributes of data entities) can be displayed graphically.
2) Obtaining recommendation function: The domain specific language involved in the present disclosure provides a series of automated machine learning functions, which can give a set containing all or part of the feasible operations (the feasible operation refers to a legal and specific operation based on the current ontology model, such as taking certain data entities and variable/constant entities as inputs, calling a specific feature engineering function, generating one or a group of attribute subjects) based on the original ontology model (data entities and their relationships) as a variable entity. The user can view, modify, and adopt all or part of the operations in the variable entity. As a result, it is convenient for the user to set a machine learning solution for the original ontology model.

The present disclosure can also export the ontology model shown in FIG. 4 as a file, or import a file as a corresponding ontology model. The ontology model (such as shown in FIG. 4) contains a complete solution of machine learning or automated machine learning, therefore, exporting and importing the ontology model can support the sharing and reuse of the solution.

Optionally, the ontology model may also include a version management function, supporting operations such as branching, diffing, merging, and log viewing. The meaning of these operations can be found in git. The ontology model can correspond to a computational graph, therefore, it is theoretically possible to realize version management by comparing the differences between two computational graphs or merging two computational graphs.

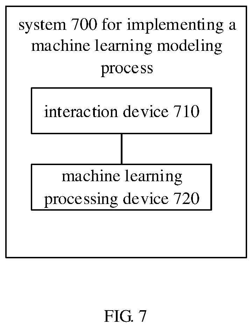

The method for implementing the machine learning modeling process of the present disclosure may also be implemented as a system for implementing the machine learning modeling process. FIG. 7 is a block diagram illustrating a system for implementing a machine learning modeling process according to an exemplary embodiment of the present disclosure. Functional units of the system for implementing the machine learning modeling process may be realized by hardware, software, or a combination of hardware and software that realizes the principles of the present disclosure. Those skilled in the art can understand that the functional units described in FIG. 7 can be combined or divided into sub-units to realize the above-mentioned principle of the present disclosure. Therefore, the description herein can support any possible combination, or division, or further limitation of the functional units described herein.

Brief description is made to the functional units that the system for implementing the machine learning modeling process is able to have and the operations that are able to be performed by each functional unit below. For the details involved, reference may be made to the relevant description above, which will not be repeated here.

As illustrated in FIG. 7, the system 700 for implementing a machine learning modeling process includes an interaction device 710 and a machine learning processing device 720.

The interaction device 710 is configured to obtain configuration information set by a user for at least part of the machine learning modeling process. The configuration information is configured to represent an execution strategy of the at least part of the machine learning modeling process. The configuration information includes a first part and a second part, an execution strategy of the first part has been determined, and an execution strategy of the second part is to be determined. For the configuration information, reference may be made to the relevant description above, which is not be repeated here.

As an example, the interaction device 710 is further configured to obtain data description information, the data description information describing one or more types of data, attributes of the data, and relationships between the data and/or the attributes; and to obtain a data model based on the data description information, the data model configured to structurally represent the data, the attributes and the relationships. For the data description information and the data model, reference may be made to the relevant description above, which is not be repeated here.

The data description information may be written by the user based on a first rule language. The interaction device 710 may read the data description information by using a reading function capable of recognizing the first rule language, and obtain the data model based on the data description information.

Optionally, the interaction device 710 may be further configured to output recommendation information to the user. The recommendation information is configured to represent a feasible operation for the data model.

The configuration information is set by the user based on the data model, and the configuration information is configured to represent an execution strategy of implementing the at least part of the machine learning modeling process based on the data and/or the attributes represented by the data model.

The machine learning processing device 720 is configured to determine the execution strategy of the second part by using automated machine learning, and execute the at least part of the machine learning modeling process based on the execution strategy of the first part and the determined execution strategy of the second part to obtain a result corresponding to the at least part of the machine learning modeling process. For the detailed process for the machine learning processing device 720 to determine the execution strategy of the second part, reference may be made to the relevant description above, which is not be repeated here.

As an example, the machine learning processing device 720 may include an interpreter and a back-end engine. The interpreter is configured to translate the configuration information into a language or an instruction corresponding to the back-end engine. The back-end engine is configured to determine the execution strategy of the second part based on the language or the instruction, and to execute the at least part of the machine learning modeling process based on the execution strategy of the first part and the determined execution strategy of the second part to obtain the result corresponding to the at least part of the machine learning modeling process.

The back-end engine includes a computational graph engine and an execution engine. The execution engine may include one or more of: an optimization engine, a machine learning engine, and an automated machine learning engine.

A first computational graph may be generated by the computational graph engine based on the language or the instruction. The first computational graph is configured to represent an implementation flow of determining the execution strategy of the second part. The computational graph engine calls the execution engine to execute the first computational graph, to determine the execution strategy of the second part.

A second computational graph is generated by the computational graph engine based on the language or the instruction. The second computational graph is configured to represent an implementation flow of at least part of the machine learning modeling process. The computational graph engine calls the execution engine to execute the second computational graph, to obtain the result corresponding to the at least part of the machine learning modeling process.

It should be understood that, the detailed implementation of the system 700 for implementing the machine learning modeling process according to the exemplary embodiment of the present disclosure may refer to the relevant detailed implementation described in FIG. 1, and it is not repeated here.

The method for implementing the machine learning modeling process and the system for implementing the machine learning modeling process according to the exemplary embodiments of the present disclosure are described above with reference to FIGS. 1 to 7. It should be understood that the above method can be implemented by a program recorded on a computer-readable medium. For example, according to an exemplary embodiment of the present disclosure, a computer-readable medium storing instructions can be provided. A computer program for implementing the method for implementing the machine learning modeling process shown in FIG. 1 is recorded on the computer-readable medium.

The computer program in the above-mentioned computer-readable medium can be run in an environment deployed in a computer device such as a client, a host, an agent device, a server, etc. It should be noted that, in addition to performing the steps shown in FIG. 1, the computer program may also be used to perform additional steps in addition to the above steps or perform more specific processing when performing the above steps. The content of these additional steps and further processing has been described with reference to FIG. 1, and will not be repeated here to avoid repetition.

It should be noted that, the system for implementing the machine learning modeling process according to the exemplary embodiment of the present disclosure can completely rely on the operation of the computer program to implement the corresponding function, that is, each device corresponds to a step of in the functional architecture of the computer program, so that the whole system is called through a special software package (for example, lib library) to realize the corresponding function.

On the other hand, each device shown in FIG. 7 can also be implemented by hardware, software, firmware, middleware, microcode, or any combination thereof. When implemented in software, firmware, middleware, or microcode, the program code or code segment used to perform the corresponding operation can be stored in a computer-readable medium such as a storage medium, so that the processor can read and run the corresponding program code or code segment to perform the corresponding operation.

For example, the exemplary embodiments of the present disclosure may also be implemented as a computing device, which includes a storage component and a processor. The storage component stores a set of computer-executable instructions, and when the set of computer-executable instructions is executed by the processor, the method for implementing the machine learning modeling process is executed.

In detail, the computing device can be deployed in a server or a client, and can also be deployed on a node device in a distributed network environment. In addition, the computing device may be a PC computer, a tablet device, a personal digital assistant, a smart phone, a web application, or other devices capable of executing the above set of instructions.

The computing device does not have to be a single computing device, and may also be any device or a set of circuits that can execute the foregoing instructions (or instruction sets) individually or jointly. The computing device may also be a part of an integrated control system or a system manager, or may be configured as a portable electronic device interconnected with a local or remote (e.g., via wireless transmission) through an interface.

In the computing device, the processor may include a central processing unit (CPU), a graphics processing unit (GPU), a programmable logic device, a dedicated processor system, a microcontroller, or a microprocessor. As an example but not limitation, the processor may also include an analog processor, a digital processor, a microprocessor, a multi-core processor, a processor array, a network processor, and the like.

Some operations described in the method for implementing the machine learning modeling process according to the exemplary embodiment of the present disclosure can be realized by software, some operations can be realized by hardware. In addition, these operations may also be implemented by a combination of software and hardware.

The processor can run instructions or codes stored in one of the storage components, where the storage component can also store data. Instructions and data can also be sent and received via a network via a network interface device. The network interface device can use any known transmission protocol.

The storage component can be integrated with the processor. For example, an RAM or a flash memory is arranged in an integrated circuit microprocessor or the like. In addition, the storage component may include an independent device, such as an external disk drive, a storage array, or any other storage device that can be used by a database system. The storage component and the processor may be operatively coupled, or may communicate with each other, for example, through an I/O interface, a network connection, etc., so that the processor can read files stored in the storage component.

In addition, the computing device may also include a video display (such as a liquid crystal display) and a user interaction interface (such as a keyboard, a mouse, a touch input device, etc.). All components of the computing device may be connected to each other via a bus and/or a network.

The operations involved in the method for implementing the machine learning modeling process according to the exemplary embodiment of the present disclosure may be described as various interconnected or coupled functional blocks or functional diagrams. However, these functional blocks or functional diagrams may be equally integrated into a single logic device or be operated according to imprecise boundaries.

For example, as described above, the system for implementing a machine learning modeling process according to an exemplary embodiment of the present disclosure may include a storage component and a processor. The storage component stores a set of computer-executable instructions. When the set of computer-executable instructions is executed by the processor, the method for implementing the machine learning modeling process mentioned above is executed.

The exemplary embodiments of the present disclosure are described above. It should be understood that the foregoing description is only exemplary and not exhaustive, and the present disclosure is not limited to the disclosed exemplary embodiments. Without departing from the scope and spirit of the present disclosure, many modifications and alterations are obvious to those skilled in the art. Therefore, the protection scope of the present disclosure should be subject to the scope of the claims.

### Industrial applicability

With the method and system for implementing the machine learning modeling process provided by the present disclosure, by referring to the user's machine learning experience and business understanding, the first part whose execution strategy can be determined by the user is obtained from the configuration information set by the user, and for the second part whose execution strategy cannot be determined by the user, the automated machine learning is used to determine the execution strategy of the second part, thus, the advantages of humans and machines can be combined to improve the implementation efficiency of the machine learning process.

## Claims

1. A system comprising at least one computing device and at least one storage device for storing instructions, wherein when the instructions are executed by the at least one computing device, the at least one computing device is caused to perform following steps of a method for implementing a machine learning modeling process:
obtaining configuration information set by a user for at least part of the machine learning modeling process, wherein the configuration information is configured to represent an execution strategy of the at least part of the machine learning modeling process, and the configuration information comprises a first part and a second part, an execution strategy of the first part has been determined, and an execution strategy of the second part is to be determined;
determining the execution strategy of the second part by using automated machine learning; and
executing the at least part of the machine learning modeling process based on the execution strategy of the first part and the determined execution strategy of the second part, to obtain a result corresponding to the at least part of the machine learning modeling process.

2. The system according to claim 1, wherein determining the execution strategy of the second part by using the automated machine learning comprises:
evaluating a plurality of execution strategies with different values in a decision space of the second part, the decision space is configured to represent a value set of the execution strategies of the second part; and
determining an execution strategy with a desired evaluation result as the execution strategy of the second part.

3. The system according to claim 2, wherein evaluating the plurality of execution strategies with different values in the decision space of the second part comprises:
performing the at least part of the machine learning modeling process based on the execution strategy of the first part and a value-assigned execution strategy of the second part to obtain a result corresponding to the at least part of the machine learning modeling process;
evaluating the result;
re-assigning a value to the execution strategy of the second part based on an evaluation result; and
repeating the above processes until a predetermined condition is satisfied, to obtain evaluation results of the plurality of execution strategies with different values of the second part.

4. The system according to claim 1, wherein when the instructions are executed by the at least one computing device, the at least one computing device is caused to further perform:
obtaining data description information, wherein the data description information describes at least one of: one or more types of data, attributes of the data, and relationships between the data and the attributes; and
obtaining a data model based on the data description information, the data model configured to structurally represent the data, the attributes and the relationships.

5. The system according to claim 4, wherein when the instructions are executed by the at least one computing device, the at least one computing device is caused to further perform:
outputting recommendation information to the user, wherein the recommendation information is configured to represent a feasible operation for the data model.

6. The system according to claim 4, wherein the data description information is written by the user based on a first rule language,
obtaining the data model configured to structurally represent the data, the attributes and the relationships based on the data description information comprises:
reading the data description information by using a reading function capable of recognizing the first rule language, and obtaining the data model based on the data description information.

7. The system according to claim 4, wherein the configuration information is set by the user based on the data model, and the configuration information is configured to represent an execution strategy of implementing the at least part of the machine learning modeling process based on at least one of the data and the attributes represented by the data model.

8. The system according to claim 7, wherein determining the execution strategy of the second part by using the automated machine learning comprises:
step A1, obtaining data for executing the at least part of the machine learning modeling process based on the data model;
step A2, assigning a value to the execution strategy of the second part;
step A3, performing the at least part of the machine learning modeling process for the data based on the execution strategy of the first part and the value-assigned execution strategy of the second part, to obtain a result corresponding to the at least part of the machine learning modeling process;
step A4, evaluating the result; and
obtaining evaluation results of a plurality of execution strategies with different values of the second part based on the steps A1 to A4, and determining an execution strategy with a desired evaluation result as the execution strategy of the second part.

9. The system according to claim 8, wherein obtaining the evaluation results of the plurality of execution strategies with different values of the second part based on the steps A1 to A4 and determining the execution strategy with the desired evaluation result as the execution strategy of the second part comprises:
step A5, re-assigning a value to the execution strategy of the second part based on an evaluation result; and
repeating the steps A3 to A5 until a predetermined condition is satisfied, and determining the execution strategy with the desired evaluation result as the execution strategy of the second part.

10. The system according to claim 7, wherein executing the at least part of the machine learning modeling process based on the execution strategy of the first part and the determined execution strategy of the second part to obtain the result corresponding to the at least part of the machine learning modeling process comprises:
obtaining data for executing the at least part of the machine learning modeling process based on the data model; and
executing the at least part of the machine learning modeling process for the data based on the execution strategy of the first part and the determined execution strategy of the second part, to obtain the result corresponding to the at least part of the machine learning modeling process.

11. The system according to claim 1, wherein the at least part of the machine learning modeling process comprises at least one of:
a data splicing process;
a data splitting process;
a feature generation process;
a model building process;
a model training process;
a model testing process;
a model evaluation process; and
a model application process.

12. The system according to claim 1, wherein,
the configuration information is written by the user based on a second rule language;
or,
the configuration information is generated by an operation performed by the user on an interactive interface displayed to the user for setting the at least part of the machine learning modeling process.

13. The system according to claim 1, wherein, comprises at least one of:
the first part comprises one or more first execution steps, and the first execution step comprises a first input, a first processing function, and a first output;
the second part comprises one or more second execution steps, the second execution step comprises a second input, a second processing function, and a second output, and at least one of the second input, the second processing function and the second output is to be determined.

14. The system according to claim 13, wherein,
the first input comprises one or more first entities, the first entity is configured to perform at least one of: representing an object with a predetermined meaning in a machine learning field; and performing a predetermined action;
the second input comprises one or more second entities, the second entity is configured to perform at least one of: representing an object with a predetermined meaning in the machine learning field; and performing a predetermined action.

15. The system according to claim 14, wherein when the instructions are executed by the at least one computing device, the at least one computing device is caused to further perform at least one of:
presenting at least one of the first entity and the second entity to the user; and
receiving a modification of the user on at least one of the first entity and the second entity.

16. The system according to claim 14, wherein at least one of the first entity and the second entity comprises at least one of:
a data entity, configured to represent data in a machine learning context, capable of performing an action of obtaining actual data;
an attribute entity, configured to represent an attribute of a data entity, capable of performing an action of obtaining actual data corresponding to the attribute;
a constant entity, configured to represent a constant, and having a value of the constant stored therein;
a variable entity, configured to represent a variable, and having a value of the variable stored therein; and
a model entity, configured to represent a model in the machine learning context, capable of performing at least one of: training a model, and predicting by using the model.

17. The system according to claim 16, wherein the second entity further comprises a decision entity, the decision entity is configured to represent a decision expected to be determined by a machine, capable of performing at least one of: generating a decision, and obtaining an optimal decision.

18. The system according to claim 17, wherein the configuration information further comprises an optimization step with a determined execution strategy, an input of the optimization step comprises the result of the at least part of the machine learning modeling process, a processing function of the optimization step is a target definition function, the target definition function is configured to evaluate the result to obtain a target entity, the target entity is configured to represent an evaluation result, and the target entity is capable of executing at least one of: optimizing the evaluation result and calculating the evaluation result.

19. The system according to claim 18, wherein determining the execution strategy of the second part by using the automated machine learning comprises: executing the optimization step, wherein executing the optimization step comprises:
step B1, performing an actual data obtaining action on at least one of: an original data entity and an original attribute entity for executing the at least part of the machine learning modeling process, to obtain corresponding actual data;
step B2, performing a decision generation action on the decision entity to obtain a value of the decision entity;
step B3, performing the at least part of the machine learning modeling process for the data based on the execution strategy of the first part and a value-assigned execution strategy of the second part to obtain a result corresponding to the at least part of the machine learning modeling process;
step B4, performing a result evaluation action on the target entity;
obtaining evaluation results of a plurality of values of the decision entity based on the steps B1 to B4, and determining a value with a desired evaluation result as an optimal decision of the decision entity.

20. The system according to claim 19, wherein obtaining evaluation results of the plurality of values of the decision entity based on the steps B1 to B4 and determining the value with the desired evaluation result as the optimal decision of the decision entity comprises:
step B5, determining a next-round value of the decision entity based on an evaluation result; and
repeating the steps B2 to B5 until a predetermined condition is satisfied, and determining the value with the desired evaluation result as the optimal decision of the decision entity.

21. The system according to claim 19, wherein executing the at least part of the machine learning modeling process based on the execution strategy of the first part and the determined execution strategy of the second part to obtain the result corresponding to the at least part of the machine learning modeling process comprises:
performing an actual data obtaining action on at least one of: an original data entity and an original attribute entity for executing the at least part of the machine learning modeling process, to obtain corresponding actual data;
obtaining an optimal decision of the decision entity; and
performing the at least part of the machine learning modeling process for the actual data based on the execution strategy of the first part and the determined execution strategy of the second part, to obtain the result corresponding to the at least part of the machine learning modeling process.

22. The system according to claim 13, wherein at least one of the first processing function and the second processing function comprises at least one of:
a data processing function;
a feature engineering function;
a modeling function;
an automated machine learning function;
a sharing and reuse function;
a version management function; and
a model application function.

23. The system according to claim 1, wherein when the instructions are executed by the at least one computing device, the at least one computing device is caused to further perform at least one of:
outputting a current execution result to the user in real time during executing the at least part of the machine learning modeling process; and
obtaining an adjustment made by the user to the configuration information during executing the at least part of the machine learning modeling process, and executing the at least part of the machine learning modeling process based on the adjusted configuration information.

24. The system according to claim 1, wherein when the instructions are executed by the at least one computing device, the at least one computing device is caused to further perform:
translating the configuration information into a language or an instruction corresponding to a back-end engine.

25. The system according to claim 24, wherein the back-end engine includes a computational graph engine and an execution engine, and when the instructions are executed by the at least one computing device, the at least one computing device is caused to further perform:
generating, by the computational graph engine, a first computational graph based on the language or the instruction, wherein the first computational graph is configured to represent an implementation flow of determining the execution strategy of the second part;
wherein determining the execution strategy of the second part by using automated machine learning comprises:
determining the execution strategy of the second part by calling, by the computational graph engine, the execution engine to execute the first computational graph.

26. The system according to claim 25, wherein when the instructions are executed by the at least one computing device, the at least one computing device is caused to further perform:
generating, by the computational graph engine, a second computational graph based on the language or the instruction, wherein the second computational graph is configured to represent an implementation flow of at least part of the machine learning modeling process;
wherein executing the at least part of the machine learning modeling process based on the execution strategy of the first part and the determined execution strategy of the second part to obtain the result corresponding to the at least part of the machine learning modeling process comprises:
obtaining the result corresponding to the at least part of the machine learning modeling process by calling, by the computational graph engine, the execution engine to execute the second computational graph.

27. The system according to claim 25, wherein the execution engine comprises at least one of:
an optimization engine;
a machine learning engine; and
an automated machine learning engine.

28. A method for implementing a machine learning modeling process, executed by at least one computing device, the method comprising:
obtaining configuration information set by a user for at least part of the machine learning modeling process, wherein the configuration information is configured to represent an execution strategy of the at least part of the machine learning modeling process, and the configuration information comprises a first part and a second part, an execution strategy of the first part has been determined, and an execution strategy of the second part is to be determined;
determining the execution strategy of the second part by using automated machine learning; and
executing the at least part of the machine learning modeling process based on the execution strategy of the first part and the determined execution strategy of the second part, to obtain a result corresponding to the at least part of the machine learning modeling process.

29. The method according to claim 28, wherein determining the execution strategy of the second part by using the automated machine learning comprises:
evaluating a plurality of execution strategies with different values in a decision space of the second part, the decision space is configured to represent a value set of the execution strategies of the second part; and
determining an execution strategy with a desired evaluation result as the execution strategy of the second part.

30. The method according to claim 29, wherein evaluating the plurality of execution strategies with different values in the decision space of the second part comprises:
performing the at least part of the machine learning modeling process based on the execution strategy of the first part and a value-assigned execution strategy of the second part to obtain a result corresponding to the at least part of the machine learning modeling process;
evaluating the result;
re-assigning a value to the execution strategy of the second part based on an evaluation result; and
repeating the above processes until a predetermined condition is satisfied, to obtain evaluation results of the plurality of execution strategies with different values of the second part.

31. The method according to claim 28, further comprising:
obtaining data description information, wherein the data description information describes at least one of: one or more types of data, attributes of the data, and relationships between the data and the attributes; and
obtaining a data model based on the data description information, the data model configured to structurally represent the data, the attributes and the relationships.

32. The method according to claim 31, further comprising:
outputting recommendation information to the user, wherein the recommendation information is configured to represent a feasible operation for the data model.

33. The method according to claim 31, wherein the data description information is written by the user based on a first rule language,
obtaining the data model configured to structurally represent the data, the attributes and the relationships based on the data description information comprises:
reading the data description information by using a reading function capable of recognizing the first rule language, and obtaining the data model based on the data description information.

34. The method according to claim 31, wherein the configuration information is set by the user based on the data model, and the configuration information is configured to represent an execution strategy of implementing the at least part of the machine learning modeling process based on at least one of the data and the attributes represented by the data model.

35. The method according to claim 34, wherein determining the execution strategy of the second part by using the automated machine learning comprises:
step A1, obtaining data for executing the at least part of the machine learning modeling process based on the data model;
step A2, assigning a value to the execution strategy of the second part;
step A3, performing the at least part of the machine learning modeling process for the data based on the execution strategy of the first part and the value-assigned execution strategy of the second part, to obtain a result corresponding to the at least part of the machine learning modeling process;
step A4, evaluating the result; and
obtaining evaluation results of a plurality of execution strategies with different values of the second part based on the steps A1 to A4, and determining an execution strategy with a desired evaluation result as the execution strategy of the second part.

36. The method according to claim 35, wherein obtaining the evaluation results of the plurality of execution strategies with different values of the second part based on the steps A1 to A4 and determining the execution strategy with the desired evaluation result as the execution strategy of the second part comprises:
step A5, re-assigning a value to the execution strategy of the second part based on an evaluation result; and
repeating the steps A3 to A5 until a predetermined condition is satisfied, and determining the execution strategy with the desired evaluation result as the execution strategy of the second part.

37. The method according to claim 34, wherein executing the at least part of the machine learning modeling process based on the execution strategy of the first part and the determined execution strategy of the second part to obtain the result corresponding to the at least part of the machine learning modeling process comprises:
obtaining data for executing the at least part of the machine learning modeling process based on the data model; and
executing the at least part of the machine learning modeling process for the data based on the execution strategy of the first part and the determined execution strategy of the second part, to obtain the result corresponding to the at least part of the machine learning modeling process.

38. The method according to claim 28, wherein the at least part of the machine learning modeling process comprises at least one of:
a data splicing process;
a data splitting process;
a feature generation process;
a model building process;
a model training process;
a model testing process;
a model evaluation process; and
a model application process.

39. The method according to claim 28, wherein,
the configuration information is written by the user based on a second rule language;
or,
the configuration information is generated by an operation performed by the user on an interactive interface displayed to the user for setting the at least part of the machine learning modeling process.

40. The method according to claim 28, comprising at least one of:
the first part comprises one or more first execution steps, and the first execution step comprises a first input, a first processing function, and a first output;
the second part comprises one or more second execution steps, the second execution step comprises a second input, a second processing function, and a second output, and at least one of the second input, the second processing function and the second output is to be determined.

41. The method according to claim 40, wherein,
the first input comprises one or more first entities, the first entity is configured to perform at least one of: representing an object with a predetermined meaning in a machine learning field; and performing a predetermined action;
the second input comprises one or more second entities, the second entity is configured to perform at least one of: representing an object with a predetermined meaning in the machine learning field; and performing a predetermined action.

42. The method according to claim 41, further comprising at least one of:
presenting at least one of the first entity and the second entity to the user; and
receiving a modification of the user on at least one of the first entity and the second entity.

43. The method according to claim 41, wherein at least one of the first entity and the second entity comprises at least one of:
a data entity, configured to represent data in a machine learning context, capable of performing an action of obtaining actual data;
an attribute entity, configured to represent an attribute of a data entity, capable of performing an action of obtaining actual data corresponding to the attribute;
a constant entity, configured to represent a constant, and having a value of the constant stored therein;
a variable entity, configured to represent a variable, and having a value of the variable stored therein; and
a model entity, configured to represent a model in the machine learning context, capable of performing at least one of: training a model, and predicting by using the model.

44. The method according to claim 43, wherein the second entity further comprises a decision entity, the decision entity is configured to represent a decision expected to be determined by a machine, capable of performing at least one of: generating a decision, and obtaining an optimal decision.

45. The method according to claim 44, wherein the configuration information further comprises an optimization step with a determined execution strategy, an input of the optimization step comprises the result of the at least part of the machine learning modeling process, a processing function of the optimization step is a target definition function, the target definition function is configured to evaluate the result to obtain a target entity, the target entity is configured to represent an evaluation result, and the target entity is capable of executing at least one of: optimizing the evaluation result and calculating the evaluation result.

46. The method according to claim 49, wherein determining the execution strategy of the second part by using the automated machine learning comprises: executing the optimization step, wherein executing the optimization step comprises:
step B1, performing an actual data obtaining action on at least one of: an original data entity and an original attribute entity for executing the at least part of the machine learning modeling process, to obtain corresponding actual data;
step B2, performing a decision generation action on the decision entity to obtain a value of the decision entity;
step B3, performing the at least part of the machine learning modeling process for the data based on the execution strategy of the first part and a value-assigned execution strategy of the second part to obtain a result corresponding to the at least part of the machine learning modeling process;
step B4, performing a result evaluation action on the target entity;
obtaining evaluation results of a plurality of values of the decision entity based on the steps B 1 to B4, and determining a value with a desired evaluation result as an optimal decision of the decision entity.

47. The method according to claim 46, wherein obtaining evaluation results of the plurality of values of the decision entity based on the steps B 1 to B4 and determining the value with the desired evaluation result as the optimal decision of the decision entity comprises:
step B5, determining a next-round value of the decision entity based on an evaluation result; and
repeating the steps B2 to B5 until a predetermined condition is satisfied, and determining the value with the desired evaluation result as the optimal decision of the decision entity.

48. The method according to claim 46, wherein executing the at least part of the machine learning modeling process based on the execution strategy of the first part and the determined execution strategy of the second part to obtain the result corresponding to the at least part of the machine learning modeling process comprises:
performing an actual data obtaining action on at least one of: an original data entity and an original attribute entity for executing the at least part of the machine learning modeling process, to obtain corresponding actual data;
obtaining an optimal decision of the decision entity; and
performing the at least part of the machine learning modeling process for the actual data based on the execution strategy of the first part and the determined execution strategy of the second part, to obtain the result corresponding to the at least part of the machine learning modeling process.

49. The method according to claim 40, wherein at least one of the first processing function and the second processing function comprises at least one of:
a data processing function;
a feature engineering function;
a modeling function;
an automated machine learning function;
a sharing and reuse function;
a version management function; and
a model application function.

50. The method according to claim 28, wherein further comprising at least one of:
outputting a current execution result to the user in real time during executing the at least part of the machine learning modeling process; and
obtaining an adjustment made by the user to the configuration information during executing the at least part of the machine learning modeling process, and executing the at least part of the machine learning modeling process based on the adjusted configuration information.

51. The method according to claim 28, further comprising:
translating the configuration information into a language or an instruction corresponding to a back-end engine.

52. The method according to claim 51, wherein the back-end engine includes a computational graph engine and an execution engine, and the method further comprises:
generating, by the computational graph engine, a first computational graph based on the language or the instruction, wherein the first computational graph is configured to represent an implementation flow of determining the execution strategy of the second part;
wherein determining the execution strategy of the second part by using automated machine learning comprises:
determining the execution strategy of the second part by calling, by the computational graph engine, the execution engine to execute the first computational graph.

53. The method according to claim 52, further comprising:
generating, by the computational graph engine, a second computational graph based on the language or the instruction, wherein the second computational graph is configured to represent an implementation flow of at least part of the machine learning modeling process;
wherein executing the at least part of the machine learning modeling process based on the execution strategy of the first part and the determined execution strategy of the second part to obtain the result corresponding to the at least part of the machine learning modeling process comprises:
obtaining the result corresponding to the at least part of the machine learning modeling process by calling, by the computational graph engine, the execution engine to execute the second computational graph.

54. The method according to claim 52, wherein the execution engine comprises at least one of:
an optimization engine;
a machine learning engine; and
an automated machine learning engine.

55. A system for implementing a machine learning modeling process, comprising:
an interaction device, configured to obtain configuration information set by a user for at least part of the machine learning modeling process, wherein the configuration information is configured to represent an execution strategy of the at least part of the machine learning modeling process, and the configuration information comprises a first part and a second part, an execution strategy of the first part has been determined, and an execution strategy of the second part is to be determined; and
a machine learning processing device, configured to determine the execution strategy of the second part by using automated machine learning, and execute the at least part of the machine learning modeling process based on the execution strategy of the first part and the determined execution strategy of the second part to obtain a result corresponding to the at least part of the machine learning modeling process.

56. A computer-readable storage medium having instructions stored thereon, wherein when the instructions are executed by at least one computing device, the at least one computing device is caused to perform the method according to any of claims 28 to 54.
